# EUROPEAN PATENT SPECIFICATION

(11) **EP 2 537 724 B1**
(45) Date of publication and mention of the grant of the patent: **21.05.2014**
(21) Application number: 12172041.1
(22) Date of filing: 14.06.2012
(51) Int. Cl.: B60T 8/32, B60T 8/34, B60T 11/10

(54) **Braking system for the wheel axles of a trailer**
Bremssystem für die Radachsen eines Anhängers
Système de freinage pour les essieux d'une remorque

(30) Priority: 21.06.2011 IT MI20111121
(43) Date of publication of application: 26.12.2012
(73) Proprietor: Catai S.r.l., 20092 Cinisello Balsamo (MI) (IT)
(72) Inventor: Boccalerio, Massimo, 20092 Cinisello Balsamo (MI) (IT)
(74) Representative: Raimondi, Margherita

(56) References cited:
- EP-A2- 1 826 085
- GB-A- 2 320 303
- US-A1- 2008 258 542

## Description

The present invention relates to a braking system for the wheel axles of a trailer connected to the hydraulic circuit of a traction unit.

It is known in the technical sector relating to vehicles with trailers, in particular for agricultural use, that there exists the need for said vehicles to be braked both in the travel condition, by means of a normal service brake operated by the user driving the traction unit, and in the rest condition, by means of a so-called parking brake, which must always become operative when the trailer is at a standstill, uncoupled from the traction unit or attached to it but with the engine switched off.

Also known are braking devices of the drum type acting on the wheels of the trailer and able to perform the dual braking action; these known devices, however, have drawbacks arising from the fact that they use cylinders acting on the drum brake, resulting in an assembly which is large in size, has a limited efficiency and poor braking response time - in particular on muddy, icy or similar ground which is typically present in the case of vehicles operating in agricultural and/or mountain terrain - and is highly complex from a maintenance point of view.

US 2008/258542 A1 discloses a tractor protection valve for an air brake system with a stability control portion that controls the application of a brake signal, where trailer parking, service brake portions and a stability control portion are formed within a common valve body.

The technical problem which is posed therefore is provide a simplified braking system for the axles of trailers, which is able to incorporate the dual action of a service brake during travel and parking brake when the engine is switched off/disengaged, being able to be supplied hydraulically by means of a single pipe connected to the hydraulic circuit of the traction unit.

In connection with this problem it is also required that this system should have small dimensions, be easy and inexpensive to produce and assemble and be able to be installed easily on any trailer even if not specifically designed, using normal standard connection means.

These results are achieved according to the present invention by a braking system for the wheel axles of a trailer according to the characteristic features of Claim 1.

Further details may be obtained from the following description of a non-limiting example of embodiment of the subject of the present invention provided with reference to the accompanying drawings in which:
- Figure 1:: shows a simplified diagram of the braking system according to the present invention applied to an axle of a trailer;
- Figure 2:: shows a schematic cross-section through the caliper of the system shown in Fig. 1 in the condition for parking braking;
- Figure 3:: shows a schematic cross-section through the caliper of the system shown in Fig. 2 in the condition where the parking brake is released;
- Figure 4:: shows a schematic cross-section through the caliper of the system shown in Fig. 2 in the service braking condition;
- Figure 5:: shows a schematic cross-section through the caliper of the system shown in Fig. 2 in the condition where the friction pads are worn;
- Figure 6:: shows a schematic cross-section similar to that of Fig. 5 in the condition where the play due to wear of the pads is taken up;
- Figure 7:: shows a schematic axial cross-section through an example of embodiment of the pressure booster of the system according to the invention in the parking braking condition corresponding to Fig. 2;
- Figure 8:: shows a cross-section similar to that of Fig. 7 with the booster during the initial stroke of the service braking condition corresponding to Fig. 4; and
- Figure 9:: shows a cross-section similar to that of Fig. 7 with the booster at the end of the service braking pressure/stroke.

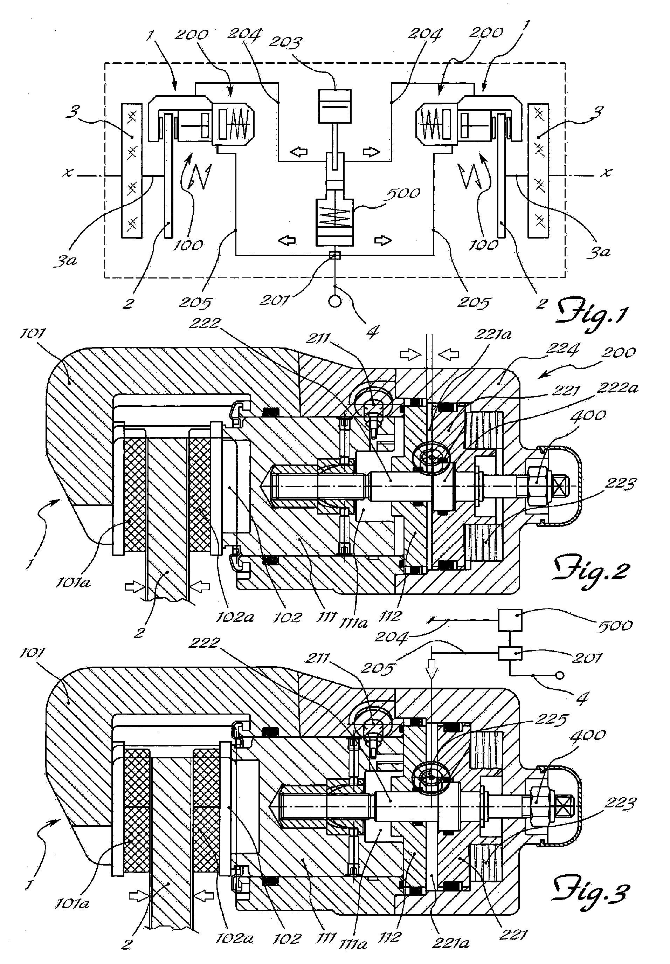

As shown in Fig. 1 and assuming solely for the sake of convenience of the description and without a limiting meaning a reference axis in the longitudinal direction X-X, corresponding to the axle 3a of the wheels 3 of a trailer, the braking system according to the invention comprises:
- at least one caliper assembly 1 acting on a disc 2 joined to the axle 3a of the wheels 3; said caliper assembly comprises in turn:
   - an actuating assembly 100 for service braking and
   - an actuating assembly 200 for parking braking;
- a supply unit 201 for the parking brake which, upon receiving the pressurised fluid directly from the supply pipe 4 connected to the hydraulic circuit of the traction unit (not shown), releases the parking brake;
- a pressure booster 500 which, upon receiving the pressurised fluid from the same supply pipe 4 connected to the traction unit, causes the delivery of an auxiliary fluid at a higher pressure which, being supplied from an auxiliary reservoir 203 via associated ducts 204, causes service braking operation of the caliper 1.

In detail the caliper 1 is of the floating type with two symmetrically movable jaws, retained by two stems (not shown), and comprises:
a first jaw 101 which carries an associated friction pad 101a and a second movable jaw 102 which carries a respective friction pad 102a; in the working condition the two jaws are arranged on opposite sides of the brake disc 2.

The service braking actuating assembly 100 comprises an actuating piston 111 arranged axially in contact with the movable 102 and slidable inside a chamber 111a formed in the first movable jaw 101 and bounded on the opposite side to the second movable jaw 102 by a fixed baffle 112.

The chamber 111 is also connected to a radial duct 211 for supplying the pressurised fluid supplied by the booster 500 via the pipe 204.

The parking braking actuating assembly 200 comprises a plunger 221 joined to the head 222a of a rod 222 in turn joined to the piston 111 of the service brake; the plunger 221 is displaceable in both senses of the longitudinal direction X-X inside an associated chamber 221a formed in the caliper body.

Operation of the plunger 221 towards the first movable jaw 101 is performed by the thrusting action of Belleville springs 223 arranged between the plunger itself and the cover 224 for closing the chamber 221a, while operation of the plunger 221 in the opposite direction is performed following the supply of a pressurised fluid through a radial duct 225 connected, via respective pipes 205, to the unit 201 supplying the pressurised fluid from the hydraulic system of the traction unit via the pipe 4.

With this configuration the operating principle of the caliper is as follows:
- when the engine of the traction unit is switched off or disengaged (Fig. 2), no pressurised fluid is supplied to the caliper 1 through the pipe 4 and consequently the Belleville springs 223 push the plunger 221 and therefore the rod 222 connected to it towards the first movable jaw 101 causing the corresponding displacement of the piston 111 which symmetrically closes the two movable jaws 101,102 and therefore the friction pads 101a,102a onto the disc 2, causing locking thereof and therefore the safety braking condition of the trailer;
- when the traction unit is coupled up and the engine switched on for travel (Fig. 3), the pressurised fluid is supplied via the pipe 4 and the supply unit 201 to the chamber 221a until the pressure of the fluid overcomes the thrusting action of the Belleville springs 223, displacing the plunger 221 on the opposite side to the first movable jaw 101.

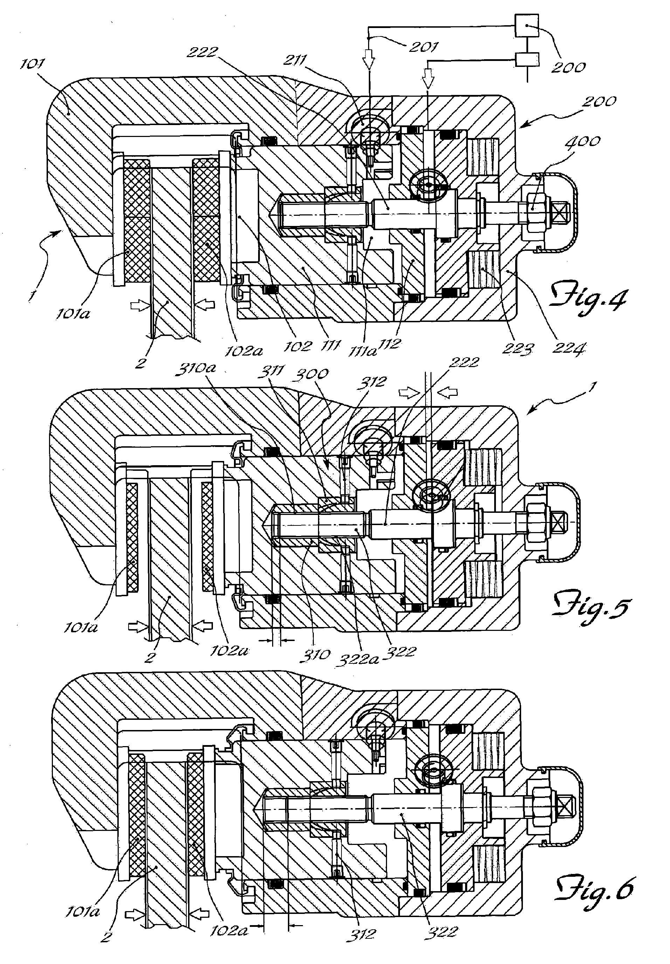

This displacement of the plunger 221 causes the movement also of the rod 222 and the piston 111, releasing the two movable jaws 101,102 and therefore the disc 2, allowing the free rotation of the wheels 3;
- if during travel the braking control system is operated (Fig. 4), the pressurised fluid is supplied to the pressure booster 500 which, via the radial duct 211, injects high-pressure fluid into the chamber 111a until, reacting against the fixed baffle 112, the fluid causes displacement of the piston 111 towards the first movable jaw 101 and therefore the symmetrical closure of the friction pads 101a,102a against the disc 2.

Release of the braking control system causes the return flow of the fluid with a boosted pressure to the storage reservoir 203 and therefore discharging of the chamber 11a, releasing the movable jaws 101,102 and the disc 2 which starts to rotate freely again.

As shown in Figures 5,6 it is envisaged that the caliper 1 according to the invention is equipped with a device 300 for automatically taking up the wear of the pads 101a,102a (Fig. 5), which device 300 comprises an adjusting insert 310 with a female thread 310a inserted inside the piston 111 coaxially with the rod 222 which has an axial adjusting extension 322 with thread 322a for mating with the female thread 310a.

The adjusting insert 310 also has on its outer surface a seat 311 with a helix, having a direction opposite to that of the female thread 310a, and with a pitch much greater than that of the female thread; radial pins 312 fixed on the piston 111 engage with the helix 311.

In the event of wear of the pads 101a,102a (Fig. 5) the pads are axially spaced from the disc 2; in this condition, upon initial operation of the service brake, the pressure of the fluid pushes against the piston 111 which moves towards the disc 2 and the displacement causes the radial pins 312 to act on the helix 311, producing unscrewing of the female thread 310a by the adjusting rod 322 with consequent relative axial displacement of the piston 111 with respect to the actuating rod 222 (Fig. 6), reducing the relative distance of the jaws until the pads 101a,102a are again closed onto the disc 2.

Upon release of the braking control system the different pitch and opposite direction of the helix and the female thread of the adjusting insert prevent the return of the piston into the starting position, thus keeping adjusted the device which will brake properly when next operated.

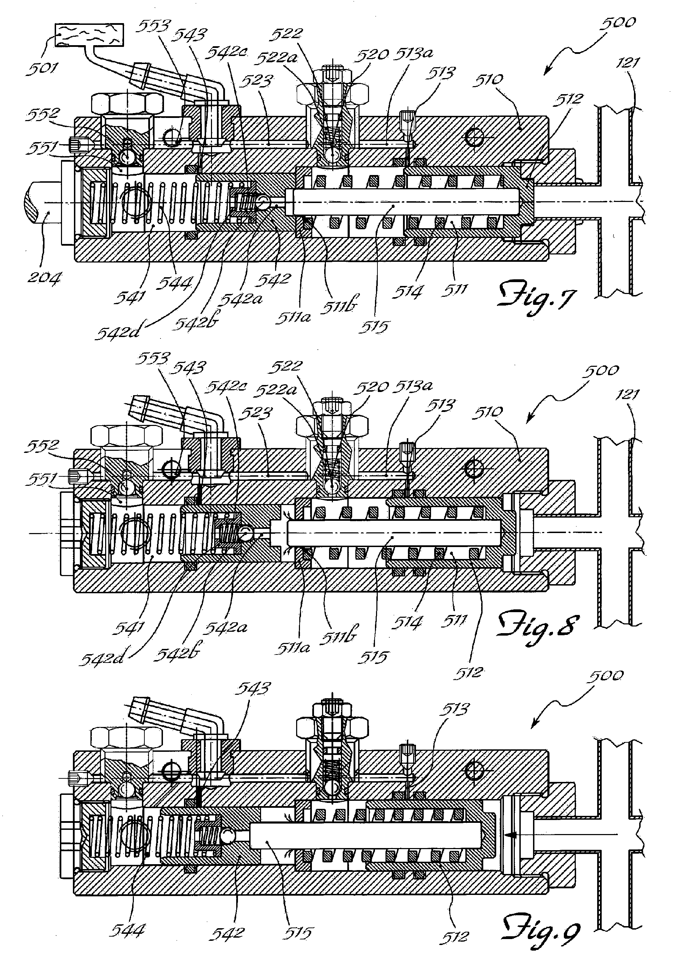

In a preferred embodiment of the device it is envisaged that the rod 222 has a manual release nut 400 arranged on the outside of the cover 224; the nut 400 acts directly on the rod 222 and therefore on the head 222a which may be displaced axially in the opposite direction to the jaws so as to recall both the piston 111 and the plunger 221 and release the disc 2 also in the total absence of pressure of the operating fluid. Figs. 7, 8 and 9 show a preferred example of embodiment of the pressure booster 500 according to the invention where activation of the booster occurs only if a predefined threshold value corresponding to the tensioning force of the Belleville springs 223 of the parking brake is exceeded.

In detail the booster 500 comprises a body 510 having, defined therein, a first chamber 511 housing displaceably a first piston 512 biased into the rest position by a spring 514.

A first radial opening 513 for supplying the fluid from the reservoir 501 through an axial duct 513a and a first radial retaining/discharge device 520 emerge inside the chamber 511; the retaining/discharge device 520 is normally closed by a ball 522 pushed by a spring 522a.

A first end of a coaxial rod 515 is connected to the piston 512, its other end passing coaxially through a spring stop disc 511a for closing the chamber 511 via an aperture 511b having an inner diameter greater than the outer diameter of the rod 515; the latter extends inside a second coaxial chamber 541 housing a second piston 542 which is displaceable and kept in the axial rest position by a second spring 544.

Said axial rest position is such that the free end of the rod 515 is axially spaced from the second piston 542.

The head of the second piston 542 has, formed inside it, an axial passage 542a, opening/closing of which is performed by a ball 542b pushed by a spring 542c which reacts against a cup member 542d in turn axially pushed towards the first chamber 511 by the second spring 544. The second chamber 541 has, emerging inside it, a radial duct 551, opening/closing of which is performed by means of a ball 552 and which connects the second chamber to a duct 553 in turn connected to the fluid reservoir 501 so that the second chamber 541 is constantly filled with a fluid from the auxiliary reservoir 501, and a radial vent 543 connected to an axial duct 523 which links together the reservoir 501 and the venting device 520 of the first chamber 511. With this configuration the pressure booster has substantially a first control circuit connected to the hydraulic circuit of the traction unit and interacting with a second control circuit, supplied with a different fluid and directly connected to the calipers acting on the respective disc, resulting in operation as follows:
- the brake is operated by the driver of the traction unit;
- the delivery pressure of the fluid in the primary circuit of the traction unit is increased and the fluid supplied to the chamber 511 via the supply unit 121;
- the pressurised fluid overcomes the thrusting force of the spring 514 and moves the piston 512 which closes the vent 513 and causes the fluid to pass from the first chamber 511 to the second chamber 541 through the aperture 511b in the end disc 511a;
- the fluid which enters into the second chamber 541 causes a first displacement of the second piston 542 which, overcoming the pretensioning force of the spring 544, is displaced so as to reduce the volume of the chamber 541, closing the vent 543, increasing the pressure of the fluid contained inside the chamber 541 which closes both the radial vent 550, pushing against the ball 552, and the axial vent 542a, pushing against the ball 542b;
- the stroke of the second piston 542 continues until the two jaws 101 and 102 are closed onto the disc 2;
- in this condition the further stroke of the first piston 512 brings the rod 515 into contact with the second piston 542 (Fig. 9), mechanically pushing against it so as to cause it to continue the closing stroke of the jaws against the thrusting action of the spring 544 until the braking action is completed.

Upon release of the brake control system, the overpressure is eliminated via opening of the ball 552, the pistons 542 and 512 start the return stroke opening in the opposite sequence the vent 543 of the second chamber and the vent 513 of the first chamber, allowing the discharging of fluid which is again distributed between the two chambers and the reservoir until a pressure equilibrium is obtained, releasing the disc 2 and preparing the booster for a new braking operation. In the case where the pads are worn (Fig. 5), the reservoir 501 will supply a greater quantity of fluid equal to the volume required to allow a greater stroke of the piston 111 of the calipers (Fig. 6).

It is therefore clear how, with the caliper and disc braking system which houses the actuating devices for both the service brake and the parking brake according to the invention, it is possible to control the braking system of a trailer by means of a single pipe connected to the hydraulic circuit of the traction unit; said system comprises a pressure booster which remains inactive when the service brake is not operated, allowing mechanical operation of the parking brake, whereas, when the service brake is operated, it maintains a constant pressure for the parking brake, so as to allow release thereof, supplying instead a fluid with a boosted pressure to the service brake in order to ensure efficient operation of the latter.

Although described in connection with certain constructional forms and certain preferred examples of embodiment of the invention, it is understood that the scope of protection of the present patent is defined solely by the following claims.

## Claims

1. Braking system for the axles (3a) of wheels (3) of a trailer connected to the hydraulic circuit (4) of a traction unit, **characterized in that** it comprises a disc (2) for each wheel (3) mounted on the axle (3a) and a floating caliper (1) with hydraulic control means (205;221a,204;211) for each disc (2) comprising a first movable jaw (101) which carries a respective friction pad (101a) and a second movable jaw (102) which carries a respective friction pad (102a), symmetrically arranged on opposite sides of the disc (2), said floating caliper comprising means (200,223,221,222a,222,111) for automatically performing parking braking, which can be deactivated by the hydraulic circuit (4) of the traction unit, and means (100,112,222,111,211) for performing service braking, which are hydraulically connected to a second control circuit (542,541,544,501) of a pressure booster device (500) provided with a first control circuit (511,512,515) supplied by the fluid of the hydraulic circuit of the traction unit and interacting with said second control circuit supplied by an auxiliary reservoir (501) containing a second fluid independent of that of the traction unit.

2. System according to Claim 1, **characterized in that** the service braking control assembly (100) comprises an actuating piston (111) arranged axially in contact with the movable jaw (102) and slidable inside a chamber (111a) formed in the first movable jaw (101) and bounded on the opposite side to the second movable jaw (102) by a fixed baffle (112).

3. System according to Claim 2, **characterized in that** said chamber (111a) is connected to a radial duct (211) for supplying the pressurised fluid supplied from the booster (500) via a pipe (204).

4. System according to Claim 1, **characterized in that** the parking braking control assembly (200) comprises a plunger (221) housed inside an associated chamber (221a) formed in the caliper body and joined to the head (222a) of a rod (222) in turn joined to the piston (111) of the service brake.

5. System according to Claim 4, **characterized in that** said plunger (221) is displaceable towards the first movable jaw (101) by the thrusting action of Belleville springs (223) arranged between the said plunger and a cover (224) for closing the chamber (221a) and in the opposite direction by the supply of pressurised fluid through a radial duct (225) connected to the hydraulic system of the traction unit via the pipe (4).

6. System according to Claim 1, **characterized in that** said caliper (1) is equipped with a device (300) for automatically taking up the wear of the pads (101a,102a), comprising an adjusting insert (310) with female thread (310a) inserted inside the piston (111) coaxially with the rod (222) which has an axial adjusting extension (322) with thread (322a) for mating with the female thread (310a).

7. System according to Claim 6, **characterized in that** said adjusting insert (310) has on its outer surface a seat (311) with helix, having a direction opposite to that of the female thread (310a) and with a pitch much greater than that of the female thread, radial pins (312) fixed on the piston (111) acting on the helix (311).

8. System according to Claim 1, **characterized in that** said rod (222) is associated with a nut (400) arranged on the outside of the cover (224) for manually releasing the parking braking control means (221,223).

9. System according to Claim 1, **characterized in that** said pressure booster (500) comprises a body (510) having, defined therein, a first chamber (511) housing displaceably a first piston (512) biased into the rest position by a first spring (514), a second coaxial chamber (541) housing a second displaceable piston (542) kept in the axial rest position by a second spring (544); the first piston (512) having, connected thereto, a first end of a coaxial rod (515), the other end of which passes coaxially through a spring-stop disc (511a) of the chamber (511), extending inside the second chamber (541).

10. System according to Claim 9, **characterized in that** the axial rest position of the rod (515) is such that the free end of the said rod (515) is axially spaced from the second piston (542) in the rest position.

11. System according to Claim 9, **characterized in that** the rod (515) extends into the second chamber (541) through an aperture (511b) formed in a spring-stop disc (511a) of the first chamber, said aperture having an inner diameter greater than the outer diameter of the rod (515).

12. System according to Claim 9, **characterized in that** a first radial opening (513) for supplying the fluid from the reservoir (501) through an axial duct (513a), and a first radial retaining/discharge device (520), which is normally closed by a ball (522) pushed by a spring (522a), emerge inside the chamber (511).

13. System according to Claim 9, **characterized in that** an axial passage (542a) is formed inside the head of the second piston (542), opening/closing of said passage being performed by means of a ball (542b) pushed by a spring (542c) which reacts against a cup member (542d) in turn axially pushed towards the first chamber (511) by the second spring (544).

14. System according to Claim 9, **characterized in that** a radial duct (551), opening/closing of which is performed by means of a ball (552) and which connects the second chamber to a duct (553) in turn connected to the fluid reservoir (501), and a radial vent (543), which is connected to an axial duct (523) linking together the reservoir (501) and the venting device (520) of the first chamber (511), emerge inside the second chamber (541).

## Patentansprüche

1. Bremssystem für Achsen (3a) von Rädern (3) von einem Anhänger, der mit dem Hydraulikkreislauf (4) einer Antriebseinheit verbunden ist, **dadurch gekennzeichnet, dass** es für jedes Rad (3) eine Scheibe (2), die auf der Achse (3a) befestigt ist, und für jede Scheibe (2) einen Schwimmsattel (1) mit hydraulischen Steuereinrichtungen (205;221a, 204;211) umfasst, umfassend einen ersten beweglichen Backen (101), der einen entsprechenden Bremsklotz (101 a) trägt, und einen zweiten beweglichen Backen (102), der einen entsprechenden Bremsklotz (102a) trägt, die symmetrisch an gegenüberliegenden Seiten der Scheibe (2) angeordnet sind, wobei der besagte Schwimmsattel Einrichtungen (200, 223, 221, 222a, 222, 111) zur automatischen Durchführung der Parkbremsung umfasst, die durch den Hydraulikkreislauf (4) der Antriebseinheit deaktiviert werden können, und Einrichtungen (100, 112, 222, 111, 211) zur Durchführung der Betriebsbremsung umfasst, die mit einem zweiten Steuerkreislauf (542, 541, 544, 501) einer Druckerverstärkervorrichtung (500) hydraulisch verbunden sind, welche mit einem ersten Steuerkreislauf (511, 512, 515) ausgestattet ist, der mit der Flüssigkeit des Hydraulikkreislaufs der Antriebseinheit versorgt ist und mit dem besagten zweiten Steuerkreislauf interagiert, der durch ein Zusatzreservoir (501) versorgt ist, das eine zweite Flüssigkeit enthält, die unabhängig von der der Antriebseinheit ist.

2. System nach Anspruch 1, **dadurch gekennzeichnet dass** die Betriebsbremssteueranordnung (100) einen Betätigungskolben (111) umfasst, der axial in Kontakt mit der beweglichen Backe (102) und gleitfähig innen in einer Kammer (111a), die in der ersten beweglichen Backe (101) gebildet ist, angeordnet ist und an der gegenüberliegenden Seite zu der zweiten beweglichen Backe (102) durch eine feste Trennwand begrenzt ist.

3. System nach Anspruch 2, **dadurch gekennzeichnet dass** die besagte Kammer (111 a) mit einem radialen Kanal (211) für die Zufuhr über eine Leitung (204) der unter Druck stehenden Flüssigkeit aus dem Verstärker (500) verbunden ist.

4. System nach Anspruch 1, **dadurch gekennzeichnet, dass** die Parkbremssteueranordnung (200) einen Plunger (221) umfasst, der innen in einer angeschlossenen Kammer (221a), die in dem Sattelkörper ausbildet ist, untergebracht ist und mit dem Kopf (222a) einer Stange (222) verbunden ist, die wiederum mit dem Kolben (111) der Betriebsbremse verbunden ist.

5. System nach Anspruch 4, **dadurch gekennzeichnet, dass** der besagte Plunger (221) in Richtung der ersten beweglichen Backe (101) durch die Schubkraft von Tellerfedern (223), die zwischen dem besagten Plunger und einer Abdeckung (224) zum Verschließen der Kammer (221a), verschiebbar ist und in die entgegen gesetzte Richtung durch die Zufuhr der unter Druck stehenden Flüssigkeit durch einen radialen Kanal (225), der über eine Leitung (4) mit dem hydraulischen System der Antriebseinheit verbunden ist, verschiebbar ist.

6. System nach Anspruch 1, **dadurch gekennzeichnet, dass** der besagte Sattel (1) mit einer Vorrichtung (300) zur automatischen Aufnahme des Verschleißes der Klötze (101 a, 102a) ausgestattet ist, umfassend einen Stelleinsatz (310) mit einem Innengewinde (310a), der innen in den Kolben (111) koaxial zu der Stange (222) eingeführt ist, wobei die besagte Stange (222) einen axialen Stellfortsatz (322) mit einem Gewinde (322a) für ein Ineinandergreifen mit dem Innengewinde (310a) aufweist.

7. System nach Anspruch 6, **dadurch gekennzeichnet, dass** der Stelleinsatz (310) an seiner Außenoberfläche eine Aufnahme (311) mit einer Wendel aufweist, die eine Richtung, die der Richtung des Innengewindes (310a) entgegengesetzt ist, und die eine Steigung, die viel größer ist als die des Innengewindes, hat, wobei radiale Stifte (312), die auf dem Kolben (111) befestigt sind, auf die Wendel (311) einwirken.

8. System nach Anspruch 1, **dadurch gekennzeichnet, dass** die Stange (222) mit einer Mutter (400) verbunden ist, die zur manuellen Lösung der Parkbremssteuereinrichtungen (221, 223) auf der Außenseite der Abdeckung (224) angeordnet ist.

9. System nach Anspruch 1, **dadurch gekennzeichnet, dass** der besagte Druckverstärker (500) einen Körper (510) umfasst, in dem eine erste Kammer (511) definiert ist, die verschiebbar einen ersten Kolben (512) beherbergt, der durch eine erste Feder (514) in die Ruheposition gedrängt ist, und eine zweite koaxiale Kammer (541) definiert ist, die einen zweiten verschiebbaren Kolben (542) beherbergt, der durch eine zweite Feder (544) in der axialen Ruheposition gehalten wird; den ersten Kolben (512) umfasst, an den ein erstes Ende einer koaxialen Stange (515) gebunden ist, wobei das andere Ende der Stange (515) koaxial durch eine Federanschlagscheibe (511a) von der Kammer (511) reicht und sich in das Innere der zweiten Kammer (541) erstreckt.

10. System nach Anspruch 9, **dadurch gekennzeichnet, dass** die axiale Ruheposition der Stange (515) derart ist, dass das freie Ende der besagten Stange (515) in Axialrichtung einen räumlichen Abstand zu dem zweiten Kolben (542) in der Ruheposition hat.

11. System nach Anspruch 9, **dadurch gekennzeichnet, dass** sich die Stange (515) durch einen Durchbruch (511 b), der in einer Federanschlagscheibe (511a) von der ersten Kammer (511) gebildet ist, in die zweite Kammer (541) erstreckt, wobei der besagte Durchbruch einen Innendurchmesser hat, der größer ist als der Außendurchmesser der Stange (515).

12. System nach Anspruch 9, **dadurch gekennzeichnet, dass** eine erste radiale Öffnung (513) für die Zufuhr der Flüssigkeit aus dem Reservoir (501) durch einen axialen Kanal (513a) und eine erste radiale Rückhalte/Ablassvorrichtung (520), die normalerweise durch einen Ball (522), der durch eine Feder (522a) angedrückt wird, verschlossen ist, im Inneren der Kammer (511) auftreten.

13. System nach Anspruch 9, **dadurch gekennzeichnet, dass** innen in dem Kopf des zweiten Kolbens (542) ein axialer Durchgang (542a) ausgebildet ist, wobei das Öffnen/Schießen des besagten Durchgangs mittels eines Balls (542b) durchgeführt wird, der durch eine Feder (542c) angedrückt wird, die gegen ein Becherelement (542d) wirkt, das wiederum axial in Richtung der ersten Kammer (511) mittels der zweiten Feder (544) gedrückt wird.

14. System nach Anspruch 9, **dadurch gekennzeichnet, dass** ein radialer Kanal (551), dessen Öffnen/Schließen mittels eines Balls (552) durchgeführt wird und der die zweite Kammer mit einem Kanal (553) verbindet, der wiederum mit dem Flüssigkeitsreservoir (501) verbunden ist, und eine radiale Entlüftung (543), die mit einem axialen Kanal (523) verbunden ist, der das Reservoir (501) und die Entlüftungsvorrichtung (520) der ersten Kammer (511) miteinander verbindet, im Inneren der zweiten Kammer (541) auftreten.

## Revendications

1. Système de freinage des essieux (3a) de roues (3) d'une remorque, raccordé au circuit hydraulique (4) d'une unité de traction, **caractérisé en ce qu'**il comprend un disque (2) pour chaque roue (3) monté sur l'essieu (3a) et un étrier de frein flottant (1) doté d'un moyen de commande hydraulique (205 ; 221a, 204 ; 211) de chaque disque (2) comprenant une première mâchoire mobile (101) qui porte une plaquette de frein respective (101a) et une seconde mâchoire mobile (102) qui porte une plaquette de frein respective (102a), disposées symétriquement sur les côtés opposés du disque (2), ledit étrier de frein flottant comprenant des moyens (200, 223, 221, 222a, 222, 111) destinés à assurer automatique un freinage de stationnement, lesquels peuvent être désactivés par le circuit hydraulique (4) de l'unité de traction, et des moyens (100, 112, 222, 111, 211) destinés à assurer un freinage de service, lesquels sont raccordés hydrauliquement à un second circuit de commande (542, 541, 544, 501) d'un dispositif surpresseur (500) pourvu d'un premier circuit de commande (511, 512, 515) alimenté par le fluide du circuit hydraulique de l'unité de traction et interagissant avec ledit second circuit de commande alimenté par un réservoir auxiliaire (501) contenant un second fluide indépendant de celui de l'unité de traction.

2. Système selon la revendication 1, **caractérisé en ce que** l'ensemble de commande de freinage de service (100) comprend un piston d'actionnement (111) disposé axialement en contact avec la mâchoire mobile (102) et pouvant coulisser à l'intérieur d'une chambre (111a) formée dans la première mâchoire mobile (101) et délimitée, du côté opposé à la seconde mâchoire mobile (102), par un déflecteur fixe (112).

3. Système selon la revendication 2, **caractérisé en ce que** ladite chambre (111a) est raccordée à une conduite radiale (211) destinée à fournir le fluide sous pression fourni par le surpresseur (500) par le biais d'un tuyau (204).

4. Système selon la revendication 1, **caractérisé en ce que** l'ensemble de commande de freinage de stationnement (200) comprend un plongeur (221) logé à l'intérieur d'une chambre associée (221a) formée dans le corps d'étrier de frein et lié à la tête (222a) d'une tige (222) liée à son tour au piston (111) du frein de service.

5. Système selon la revendication 4, **caractérisé en ce que** ledit plongeur (221) peut être décalé vers la première mâchoire mobile (101) par l'action de poussée de ressorts Belleville (223) disposés entre ledit plongeur et un couvercle (224) destiné à fermer la chambre (221a) et dans le sens opposé par la délivrance de fluide sous pression à travers un conduite radiale (225) raccordée au système hydraulique de l'unité de traction par le biais du tuyau (4).

6. Système selon la revendication 1, **caractérisé en ce que** ledit étrier de frein (1) est équipé d'un dispositif (300) destiné à reprendre automatiquement l'usure des plaquettes (101a, 102a), comprenant une pièce rapportée de réglage (310) pourvue d'un filetage femelle (310a) introduite à l'intérieur du piston (111) coaxialement à la tige (222) qui comporte un prolongement de réglage axial (322) pourvu d'un filetage (322a) pour accouplement avec le filetage femelle (310a).

7. Système selon la revendication 6, **caractérisé en ce que** ladite pièce rapportée de réglage (310) comporte, sur sa surface extérieure, un logement (311) à spirale, ayant un sens contraire à celui du filetage femelle (310a) et un pas bien plus grand que celui du filetage femelle, des broches radiales (312) fixées sur le piston (111) agissant sur la spirale (311).

8. Système selon la revendication 1, **caractérisé en ce que** ladite tige (222) est associée à un écrou (400) disposé à l'extérieur du couvercle (224) dans le but de libérer manuellement les moyens de commande de freinage de stationnement (221, 223).

9. Système selon la revendication 1, **caractérisé en ce que** ledit surpresseur (500) comprend un corps (510) comportant, définie en son sein, une première chambre (511) logeant, de manière à pouvoir être décalé, un premier piston (512) rappelé dans la position de repos par un premier ressort (514), une seconde chambre coaxiale (541) logeant un second piston pouvant être décalé (542) maintenu dans la position de repos axiale par un second ressort (544) ; le premier piston (512) comportant, en prise avec celui-ci, une première extrémité d'une tige coaxiale (515), dont l'autre extrémité passe coaxialement à travers un disque de butée de ressort (511a) de la chambre (511), s'étendant à l'intérieur de la seconde chambre (541).

10. Système selon la revendication 9, **caractérisé en ce que** la position de repos axiale de la tige (515) est telle que l'extrémité libre de ladite tige (511) est écartée axialement du second piston (542) dans la position de repos.

11. Système selon la revendication 9, **caractérisé en ce que** la tige (515) s'étend dans la seconde chambre (541) à travers une ouverture (511b) formée dans un disque de butée de ressort (511a) de la première chambre, ladite ouverture ayant un diamètre intérieur supérieur au diamètre extérieur de la tige (515).

12. Système selon la revendication 9, **caractérisé en ce qu'**une première ouverture radiale (513), servant à délivrer le fluide du réservoir (501) à travers une conduite axiale (513a), et un premier dispositif de retenue/décharge radiale (520), qui est normalement fermé par une bille (522) poussée par un ressort (522a), émergent à l'intérieur de la chambre (511).

13. Système selon la revendication 9, **caractérisé en ce qu'**un passage axial (542a) est formé à l'intérieur de la tête du second piston (542), une ouverture/fermeture dudit passage étant exécutée au moyen d'une bille (542b) poussée par un ressort (542c) qui réagit contre un élément coupelle (542d) poussé axialement à son tour vers la première chambre (511) par le second ressort (544).

14. Système selon la revendication 9, **caractérisé en ce qu'**une conduite radiale (551), dont une ouverture/fermeture est exécutée au moyen d'une bille (552) et qui met en communication la seconde chambre avec une conduite (553) qui communique à son tour avec le réservoir de fluide (501), et un évent radial (543), qui communique avec une conduite axiale (523) assurant la liaison, l'un avec l'autre, du réservoir (501) et du dispositif de mise à l'air libre (520) de la première chambre (511), émergent à l'intérieur de la seconde chambre (541).
